(19) Europäisches Patentamt
European Patent Office
Office européen des brevets

(11) Publication number: 0 395 185 A1

# (12) EUROPEAN PATENT APPLICATION

(21) Application number: 90201073.5

(22) Date of filing: 27.04.90

(51) Int. Cl.[5]: C08G 59/68, C09D 163/00, C09D 5/03

(30) Priority: 28.04.89 NL 8901078

(43) Date of publication of application: 31.10.90 Bulletin 90/44

(84) Designated Contracting States: AT BE CH DE DK ES FR GB GR IT LI NL SE

(71) Applicant: STAMICARBON B.V.
Mijnweg 1
NL-6167 AC Geleen(NL)

(72) Inventor: Wories, Herman Jelle
Romulushof 43
NL-6215 EJ Maastricht(NL)
Inventor: Van den Elshout, Wilhelmus Henricus Hubertus
Walramstraat 128-18
NL-6131 BP Sittard(NL)
Inventor: Van den Boom, Henricus Petrus Antonius Johannes
Rudigerstraat 29
NL-5408 AA Uden(NL)

## (54) Curing catalyst for application in powder coatings.

(57) The invention relates to a curing catalyst on the basis of a benzotriazole. The benzotriazole is substituted at a nitrogen atom with an organic group with less than 20 carbon atoms. The catalyst is used in powder coatings on the basis of epoxyfunctional compounds.

EP 0 395 185 A1

# CURING CATALYST FOR APPLICATION IN POWDER COATINGS

The invention relates to a curing catalyst for application in powder coatings on the basis of epoxyfunctional compounds, the catalyst being based on a benzotriazole.

Such a catalyst for the reaction of an epoxy resin with a polyester is known from EP-B-125906, in which the benzotriazole at the aromatic ring may be substituted with an alkyl group with 1-4 carbon atoms.

Although the use of the catalysts according to EP-B-125906 results in reasonable powder coatings with respect to the combination of impact deformation, flow time and curing time properties there is a need for better catalysts.

The object of the invention is to provide a curing catalyst for application in powder coatings which improves the aforesaid combination of properties.

The invention is characterized in that the benzotriazole, at a nitrogen atom, is substituted with an organic group, with less than 20 carbon atoms.

According to a preferred embodiment of the invention, the substituted benzotriazole is characterized by formula (1):

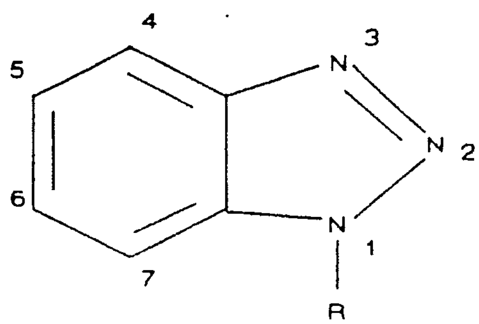

(1)

in which R = 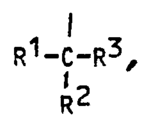 or

R = 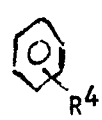 or

R = 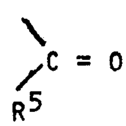

in which $R^1$ = H, ($C_1$-$C_4$) alkyl, halogen, OH, $NR^6R^7$, $COOR^8$ or phenyl,
in which $R^6$ = H or ($C_1$-$C_4$) alkyl and
$R^7$ = ($C_1$-$C_4$) alkyl, or in which
$R^6$ and $R^7$ together form a ring with 3-8 carbon atoms which may contain a group selected from the group consisting of an ether, thioether and amino groups and
$R^8$ = H or ($C_1$-$C_4$) alkyl,
$R^2$ = H, ($C_1$-$C_4$) alkyl or halogen,
$R^3$ = H, halogen or ($C_1$-$C_4$) alkyl, or in which $R^2$ and $R^3$ together form a ring with 3-8 carbon atoms which may contain a group selected from the group consisting of an ether, thioether and amino groups
$R^4$ = H, ($C_1$-$C_4$) alkyl, halogen or $OR^9$, where
$R^9$ = ($C_1$-$C_4$) alkyl, and
$R^5$ = ($C_1$-$C_4$) alkyl.

According to another preferred embodiment of the invention the substituted benzotriazole used is a

compound with formula (1), in which

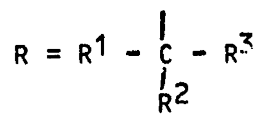

and in which

$R^1$ = H, ($C_1$-$C_4$) alkyl, phenyl or $NR^6R^7$, where $R^6$ = $R^7$ = ($C_1$-$C_4$) alkyl, or where $R^6$ and $R^7$ together form a ring with 3-8 carbon atoms which may contain an ether, thioether or amino group,

$R^2$ = H or ($C_1$-$C_4$) alkyl, and

$R^3$ = H or ($C_1$-$C_4$) alkyl.

Examples of suitable compounds according to formula (1) in which

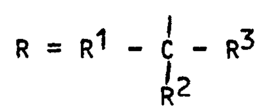

are N-methylbenzotriazole, N-methylmorpholinobenzotriazole, N-benzylbenzotriazole, N-methylpyperidinobenzotriazole, N-methylolbenzotriazole, N-pivalic acid benzotriazole and/or N-tertiary butylbenzotriazole.

Examples of suitable compounds according to formula (1) in which

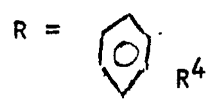

are 1-phenylbenzotriazole, (methyl)phenylbenzotriazole and methoxyphenylbenzotriazole.

Examples of suitable compounds according to formula (1) in which

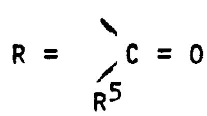

are acetylbenzotriazole and pivaloylbenzotriazole.

The invention also relates to curing catalysts for application in powder coatings on the basis of epoxyfunctional compounds with the catalyst substituted according to formula (2). The benzotriazole is substituted at a nitrogen with an organic group with less than 20 carbon atoms, and is also substituted at the aromatic ring:

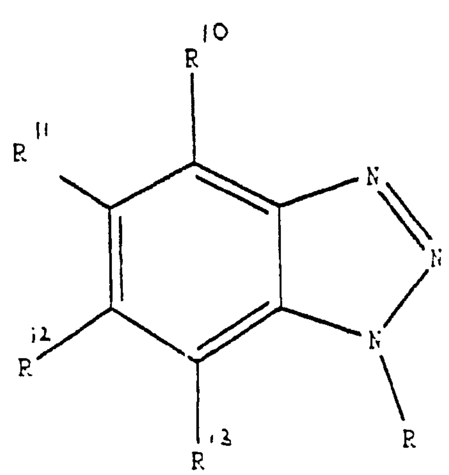

(2)

where $R^{10}$, $R^{11}$, $R^{12}$ and $R^{13}$ simultaneously or separately are ($C_1$-$C_7$) alkyl, H, $OR^{14}$ or halogen, or where $R^{10}$ and $R^{11}$ or $R^{11}$ and $R^{12}$ or $R^{12}$ and $R^{13}$ together form a ring with 4-10 carbon atoms or form one or more aromatic rings, and
where $R^{14}$ = H or ($C_1$-$C_6$) alkyl.

Preferably, $R^{10}$, $R^{11}$, $R^{12}$ and $R^{13}$ are simultaneously or separately ($C_1$-$C_7$) alkyl.

Suitable examples of such catalysts are 1-phenyl-5,6-dimethylbenzotriazole, 1-phenyl-tolyltriazole,1-acetyl-5,6-dimethylbenzotriazole and 1-acetyltolyltriazole.

Suitable halogen substituents in the formula according to the invention are fluorine, chlorine and bromine.

Powder coatings have gained much in popularity in the past decade due to their low environmental impact, ease of application and good quality. Coating systems on the basis of polyesters take an important place in this area. Here distinction can be made between several systems for instance. One of those systems consists of, for instance, an acid terminated polyester and triglycidylisocyanurate (TGIC) in a ratio of 93:7 and is used where good weather resistance is required (facade cladding, garden furniture, bicycles). Another system consists of an acid terminated polyester in combination with an epoxy resin on the basis of bisphenol A and is only suitable for indoor applications (refrigerators) on account of, among other reasons, its discolouration when exposed to outdoor light (UV). Curing in these two systems is based on the reaction between the carboxyl groups of the polyester and the epoxide groups of the second component. This takes place at an elevated temperature (180-200°C) and mostly under the influence of catalysts.

The catalyst according to the invention is by preference suitable for producing powder coatings employing acid-terminated polyester resins and epoxy compounds. At a temperature of about 110-130°C the acid terminated polyester resins are mixed, by means of extrusion for instance, with a polyfunctional epoxide, pigments and other additives and, after having been sprayed electrostatically, they are cured under the influence of a catalyst at temperatures from 160°C to 200°C. During the curing process the powder melts and then flows out to form a smooth closed coating film before the curing reaction really starts. The catalyst should ensure rapid curing, but should be virtually inactive during the mixing of the polyester and the epoxy compound. After the polyester has been prepared at temperatures of from 200¤C to 280¤C and subsequently cooled to 190-200°C, the curing catalyst according to the invention is added. The catalyst according to the invention may also be added during the mixing of the polyester and the epoxy compound, however. The requirements that have to be met by such a catalyst, viz. virtual absence of reaction at temperatures from 80¤C up to 130°C, but a fast reaction at temperatures from 160°C to 240¤C, imply a very strong temperature dependence.

The catalyst according to the invention is preferably applied in quantities between 0.01 wt.% and 2.0 wt.%, inclusive, relative to the polyester resin, preferably in quantities between 0.1 and 1.0 wt.%, inclusive, relative to the polyester resin.

Suitable polyesters can be obtained by the usual methods of preparation, starting from substantially aromatic polycarboxylic acids, such as phthalic acid, isophthalic acid, terephthalic acid, pyromellitic acid, trimellitic acid, 3,6-dichlorophthalic acid, tetrachlorophthalic acid, or, in so far as available, the anhydrides, acid chlorides or lower alkyl esters thereof. Mostly the carboxylic acid component contains at least 50 wt.%, preferably at least 70 mole % isophthalic acid and/or terephthalic acid.

One may also use, in particular, aliphatic diols, such as ethylene glycol, propane-1,2-diol, propane-1,3-diol, butane-1,2-diol, butane-1,4-diol, butane-1,3-diol, 2,2-dimethylpropanediol-1,3 (= neopentylglycol), hexane-2,5-diol, hexane-1,6-diol, 2,2-[bis-(4-hydroxycyclohexyl)]-propane, 1,4-dimethylolcyclohexane, diethyleneglycol, dipropyleneglycol and 2,2-bis-[4-(2-hydroxylethoxy)]-phenylpropane and smaller quantities of polyols, such as glycerol, hexanetriol, pentaerytritol, sorbitol, trimethylolethane, trimethylolpropane and tri-(2-hydroxy)-isocyanurate. Instead of diols or polyols, epoxy compounds can also be used. The alcohol component preferably contains 50 mole % neopentylglycol and/or propylene glycol.

As polycarboxylic acids can also be used cycloaliphatic and/or acyclic polycarboxylic acids, such as for example tetrahydrophthalic acid, hexahydroendomethylenetetrahydrophthalic acid, azelaic acid, sebacic acid, decanecarboxylic acid, dimeric fatty acid, adipic acid, succinic acid, maleic acid, in quantities of up to 30 mole %, preferably up to 20 mole % of the total of carboxylic acids. Hydroxyl carboxylic acids and/or lactones can also be used, e.g. 12-hydroxystearic acid, epsilon caprolactone, hydroxypivalic acid ester of neopentylglycol. In minor quantities, monocarboxylic acids, such as benzoic acid, tertiary butylbenzoic acid, hexahydrobenzoic acid and saturated aliphatic monocarboxylic acids can also be added during the preparation.

The polyesters are prepared, by methods known per se, by esterification or transesterification, if required in the presence of usual catalysts, such as for example dibutyl tin oxide or tetrabutyl titanate, correct choice of the preparation conditions and of the COOH/OH ratio enabling end products with an acid

number between 5 and 150 to be obtained.

As epoxy compound can be used for instance triglycidylisocyanurate or a related heterocyclic triepoxy compound, such as methyl-substituted triglycidylisocyanurate or 1,2,4-triglycidyltriazolidine-3,5-dione or diglycidylterephthalate or diglycidylhexahydroterephthalate or an epoxy resin on the basis of bisphenol A and epichlorohydrin. The quantity of epoxy compound used in the binding agent with the polyester resin depends on the acid number and on the epoxy equivalent weight of the epoxy compound with which the polyester is combined, and is in general between 0.8 and 1.2 epoxy equivalent per carboxyl equivalent.

The catalyst according to the invention can also be used in powder coating systems on the basis of for instance acrylates, oxazolidones or polyurethanes with epoxy compounds or oxazolines.

Besides application in powder coating systems, the catalyst according to the invention can also be used in liquid coating systems on the basis of acid-terminated polyesters, acrylates or oxazolidones with epoxy compounds.

All customary additives, such as for instance pigments, filling agents, flow agents and stabilizers, may of course be added to the coating systems. Suitable pigments are for instance inorganic pigments such as titanium dioxide, zinc sulphide, iron oxide and chromium oxide and inorganic pigments such as azo compounds. Suitable filling agents are for instance metal oxides, silanes, carbonates and sulphates.

The invention will now be elucidated with the following examples, without however being restricted thereto.

## Examples

### Example I

420 parts by weight of a carboxylic acid terminated polyester (Uralac P 3500TM; DSM Resins B.V.) with an acid number of 30 mg KOH/g were mixed in an extruder (Werner and Pfleiderer, ZSK 30) at 120°C with 180 parts by weight of solid epoxy resin (Araldite GT 7004TM, Ciba Geigy) with an epoxy equivalent weight of 725, with 400 parts of titanium dioxide pigment (CL 310 TM, Kronos), with 9 parts by weight of flow agent (Resiflow PV-5, Worlée), with 4.5 parts by weight of benzoin and 2.1 parts by weight of N-morpholinomethylbenzotriazole. After cooling the extrudate was comminuted, pulverized and sieved to a particle size of 90 µm. The powder obtained was applied electrostatically onto Bonder plates with a coat thickness (after curing) of 50-60 µm. Next the powder coating was cured for 25 minutes at 200°C.

### Example II

Example I was repeated, except that instead of N-morpholinomethylbenzotriazole, N-methylpyperidinobenzotriazole was used as catalyst.

### Example III

Example I was repeated, except that instead of N-morpholinomethylbenzotriazole, N-benzylbenzotriazole was used as catalyst.

### Example IV

Example I was repeated, except that instead of N-morpholinomethylbenzotriazole, N-methylolbenzotriazole was used as catalyst.

### Example V

Example I was repeated, except that instead of N-morpholinomethylbenzotriazole, acetylbenzotriazole was used as catalyst.

Comparative Example A

Example I was repeated, except that instead of 2.1 parts by weight of N-morpholinomethylbenzotriazole, 2.1 parts by weight of benzotriazole.

Example VI

The coatings obtained in accordance with Examples I-IV and Comparative Example A were tested for impact deformation (reversed impact, ASTM-D-2794-69) and flow. The flow of the surface was assessed visually. The results are given in Table 1.

TABLE 1

| Coating according to example | Impact deformation | Flow |
|---|---|---|
| I | G | 1 |
| II | G | 1 |
| III | G | 1 |
| IV | G | 1 |
| V | G | 1 |
| A | I | 2 |

where:

G = good
I = insufficient
1 = excellent
2 = reasonable

**Claims**

1. Curing catalyst based on a benzotriazole, for application in powder coatings on the basis of epoxyfunctional compounds, characterized in that the substituted benzotriazole is substituted at a nitrogen atom, with an organic group, with less than 20 carbon atoms.

2. Catalyst according to claim 1, characterized in that the benzotriazole used is a benzotriazole of formula (1)

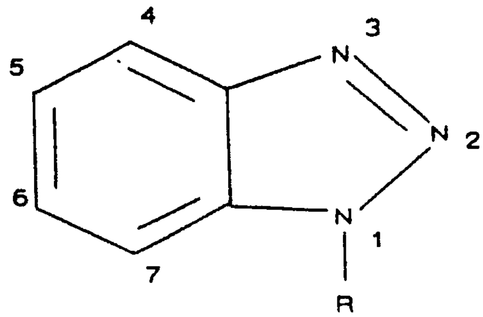

(1)

in which

R = 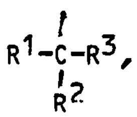 or

R = 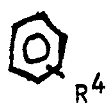 or

R = 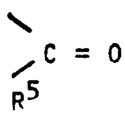

in which
$R^1$ = H, ($C_1$-$C_4$) alkyl, halogen, OH, $NR^6R^7$, $COOR^8$ or phenyl, in which
$R^6$ = H or $C_1$-$C_4$) alkyl and
$R^7$ = ($C_1$-$C_4$) alkyl, or in which
$R^6$ and $R^7$ together form a ring with 3-8 carbon atoms which may contain a group selected from the group consisting of an ether, thioether and amino groups and
$R^8$ = H or ($C_1$-$C_4$) alkyl,
$R^2$ = H, ($C_1$-$C_4$) alkyl or halogen,
$R^3$ = H, halogen or ($C_1$-$C_4$) alkyl, or in which $R^2$ and $R^3$ together form a ring with 3-8 carbon atoms which may contain a group selected from the group consisting of an ether,
thioether and amino groups
$R^4$ = H, ($C_1$-$C_4$) alkyl, halogen or $OR^9$, where
$R^9$ = ($C_1$-$C_4$) alkyl, and
$R^5$ = ($C_1$-$C_4$) alkyl.

3. Catalyst according to any one of the claims 1-2, characterized in that the benzotriazole used is a compound of formula (1), in which

R = 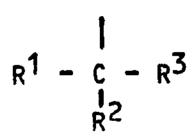

and in which
$R^1$ = H, ($C_1$-$C_4$) alkyl, phenyl or $NR^6R^7$, where $R^6$ = $R^7$ = ($C_1$-$C_4$) alkyl, or where $R^6$ and $R^7$ together form a ring with 3-8 carbon atoms which may contain a group selected from the group consisting of an ether, thioether and amino groups,
$R^2$ = H or ($C_1$-$C_4$) alkyl, and
$R^3$ = H or ($C_1$-$C_4$) alkyl.

4. Catalyst according to any one of the claims 1-3, characterized in that the benzotriazole is also

substituted at the aromatic ring according to formula (2):

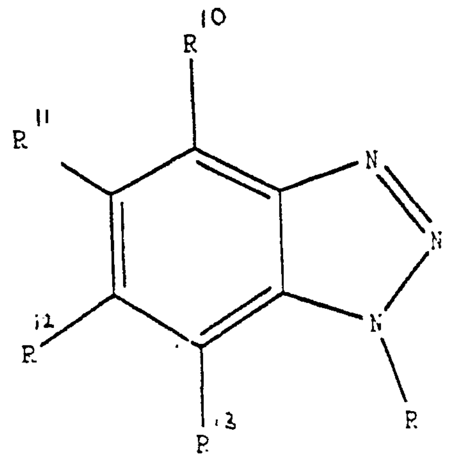

(2)

where $R^{10}$, $R^{11}$, $R^{12}$ and $R^{13}$ simultaneously or separately are $(C_1\text{-}C_7)$ alkyl, H, $OR^{14}$ or halogen, or where $R^{10}$ and $R^{11}$ or $R^{11}$ and $R^{12}$ or $R^{12}$ and $R^{13}$ together form a ring with 4-10 carbon atoms or form one or more aromatic rings, and
where $R^{14}$ = H or $(C_1\text{-}C_6)$ alkyl.

5. Process for the preparation of powder coatings on the basis of epoxyfunctional compounds and a benzotriazole being used as curing catalyst, characterized in that the benzotriazole at a nitrogen atom is substituted with an organic group, with less than 20 carbon atoms.

6. Process according to claim 5, characterized in that the benzotriazole is a benzotriazole of formula (1)

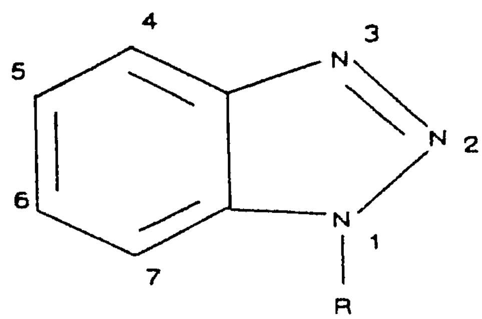

(1)

in which

R = 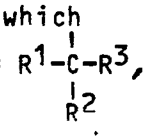, or

R = 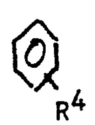, or

R = 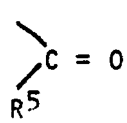

in which
$R^1$ = H, $(C_1\text{-}C_4)$ alkyl, halogen, OH, $NR^6R^7$, $COOR^8$ or phenyl, in which

$R^6$ = H or $C_1$-$C_4$) alkyl and
$R^7$ = ($C_1$-$C_4$) alkyl, or in which
$R^6$ and $R^7$ together form a ring with 3-8 carbon atoms which may contain an ether, thioether or amino group, and
$R^8$ = H, ($C_1$-$C_4$) alkyl,
$R^2$ = H or ($C_1$-$C_4$) alkyl or halogen,
$R^3$ = H, halogen or ($C_1$-$C_4$) alkyl, or in which $R^2$ and $R^3$ together form a ring with 3-8 carbon atoms which may contain an ether, thioether or amino group,
$R^4$ = H, ($C_1$-$C_4$) alkyl, halogen or $OR^9$, where
$R^9$ = ($C_1$-$C_4$) alkyl, and
$R^5$ = ($C_1$-$C_4$) alkyl.

7. Process according to any one of the claims 5-6, characterized in that as substituted benzotriazole a compound of formula (1) is used, in which

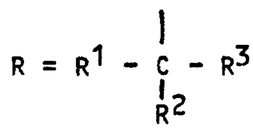

and in which
$R^1$ = H, ($C_1$-$C_4$) alkyl, phenyl or $NR^6R^7$, where $R^6$ = $R^7$ = ($C_1$-$C_4$) alkyl, or where $R^6$ and $R^7$ together form a ring with 3-8 carbon atoms which may contain an ether, thioether or amino group,
$R^2$ = H or ($C_1$-$C_4$) alkyl, and
$R^3$ = H or ($C_1$-$C_4$) alkyl.

8. Process according to any one of the claims 5-7, characterized in that the benzotriazole used is a benzotriazole substituted with an organic group with less than 20 carbon atoms at a nitrogen atom and also at the aromatic ring, in accordance with formula (2)

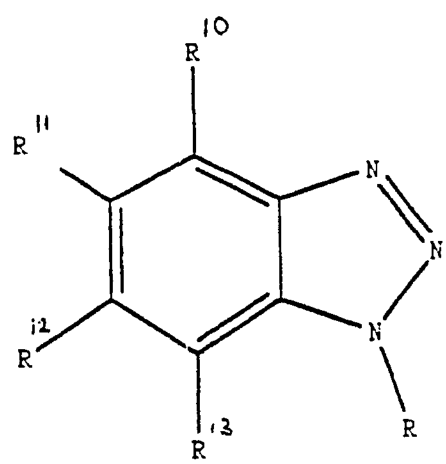

(2)

where $R^{10}$, $R^{11}$, $R^{12}$ and $R^{13}$ simultaneously or separately are ($C_1$-$C_7$) alkyl, H, $OR^{14}$ or halogen,
or where $R^{10}$ and $R^{11}$ or $R^{11}$ and $R^{12}$ or $R^{12}$ and $R^{13}$ together form a ring with 4-10 carbon atoms or form one or more aromatic rings, and
where $R^{14}$ = H or ($C_1$-$C_6$) alkyl.

9. Powder coating on the basis of a curing catalyst according to any one of the claims 1-4 or produced by the process to any of the claims 5-8.

10. Application of a benzotriazole in accordance with any one of the claims 1-4 as curing catalyst in powder coatings on the basis of epoxy functional compounds.

European Patent Office

# EUROPEAN SEARCH REPORT

Application Number

EP 90 20 1073

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 12, no. 5 (C-467)[2852], 8th January 1988; & JP-A-62 161 820 (HITACHI CHEM. CO., LTD) 17-07-1987<br>* The whole abstract *<br>----- | 1-10 | C 08 G 59/68<br>C 09 D 163/00<br>C 09 D 5/03 |
| | | | **TECHNICAL FIELDS SEARCHED (Int. Cl.5)** |
| | | | C 08 G |

The present search report has been drawn up for all claims

| Place of search | Date of completion of the search | Examiner |
|---|---|---|
| THE HAGUE | 11-07-1990 | DERAEDT G. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document